# EUROPEAN PATENT APPLICATION

(11) **EP 4 845 110 A1**
(43) Date of publication of application: **25.11.2026**
(21) Application number: 24928213.8
(22) Date of filing: 13.12.2024
(51) Int. Cl.: H04L 27/26

(54) **COMMUNICATION METHOD AND COMMUNICATION APPARATUS**

(30) Priority: 04.03.2024 CN 202410244968
(71) Applicant: Huawei Technologies Co., Ltd., Shenzhen, Guangdong 518129 (CN)
(72) Inventor: MAO, Zhi, Shenzhen, Guangdong 518129 (CN); QIAN, Bin, Shenzhen, Guangdong 518129 (CN); LI, Ying, Shenzhen, Guangdong 518129 (CN); HUANG, Lei, Shenzhen, Guangdong 518129 (CN)
(74) Representative: Epping - Hermann - Fischer
(86) International application number: PCT/CN2024/139365
(87) International publication number: WO 2025/185284

(57) **Abstract**

This application provides a communication method and a communication apparatus. The method includes: generating a PPDU; and sending the PPDU. The communication device operates in a frequency band below 1 GHz, a bandwidth of the PPDU is a first bandwidth, and a difference between a subcarrier spacing in the first bandwidth and 3 kHz is less than or equal to a first threshold. In this solution, the subcarrier spacing is close to 3 kHz in the PSD requirement of 8 dBm/3 kHz in the FCC regulations (that is, the difference between the subcarrier spacing and 3 kHz is less than or equal to the first threshold). Therefore, occupation of bandwidth resources can be reduced, thereby saving bandwidth resources and improving spectral efficiency.

## Description

### CROSS-REFERENCE TO RELATED APPLICATIONS

This application claims priority to Chinese Patent Application No. 202410244968.2, filed with the China National Intellectual Property Administration on March 4, 2024 and entitled "COMMUNICATION METHOD AND COMMUNICATION APPARATUS", which is incorporated herein by reference in its entirety.

### TECHNICAL FIELD

This application relates to the field of wireless communication technologies, and in particular, to a communication method and a communication apparatus.

### BACKGROUND

Currently, 802.11ah specifies that when a communication device operating at sub-1 gigahertz (GHz) (Sub-1 GHz) transmits physical protocol data units (physical protocol data units, PPDUs) with channel bandwidths of 2 megahertz (MHz), 4 MHz, 8 MHz, and 16 MHz, 20 MHz, 40 MHz, 80 MHz, and 160 MHz contiguous modes of a very high throughput (very high throughput, VHT) physical layer (PHY) with a 1/10 clock rate are respectively used. In this case, a subcarrier spacing for transmission of the communication device operating at sub-1 GHz is a subcarrier spacing of the VHT PHY with the 1/10 clock rate. In other words, 312.5 kHz/10=31.25 kHz.

However, the subcarrier spacing 31.25 kHz is far greater than 3 kHz in the power spectral density (Power Spectral Density, PSD) requirement of 8 decibel-milliwatts (dBm)/3 kilohertz (kHz) in the Federal Communications Commission (Federal Communications Commission, FCC) regulations. This means that more bandwidth resources need to be wasted to reach the maximum transmit power.

### SUMMARY

Embodiments of this application provide a communication method and a communication apparatus, to save bandwidth resources.

According to a first aspect, an embodiment of this application provides a communication method. The method may be performed by a communication device or a module (for example, a chip) in a communication device. The method includes: generating a PPDU; and sending the PPDU. The communication device operates in a frequency band below 1 GHz, a bandwidth of the PPDU is a first bandwidth, and a difference between a subcarrier spacing in the first bandwidth and 3 kHz is less than or equal to a first threshold.

In this solution, the subcarrier spacing is close to 3 kHz in the PSD requirement of 8 dBm/3 kHz in the FCC regulations (that is, the difference between the subcarrier spacing and 3 kHz is less than or equal to the first threshold). Therefore, occupation of bandwidth resources can be reduced, thereby saving bandwidth resources and improving spectral efficiency.

In a possible implementation, subcarriers in the first bandwidth include subcarriers for wireless power transfer and a direct current subcarrier, and the direct current subcarrier is a null subcarrier or for wireless power transfer.

In a possible implementation, a plan of the subcarriers for wireless power transfer is {(-floor((Nsc-Ndc)/2)-floor(Ndc/2)):(-floor(Ndc/2)-1), (floor(Ndc/2)+1):(floor((Nsc-Ndc)/2)+floor(Ndc/2))}. Nsc represents a quantity of subcarriers in the first bandwidth, Ndc represents a quantity of direct current subcarriers in the subcarriers in the first bandwidth, and floor represents rounding down.

In a possible implementation, the first bandwidth is 500 kHz, the subcarrier spacing in the first bandwidth is 3 kHz, a fast Fourier transform FFT size corresponding to the first bandwidth is 256, and Nsc≥159.

In the solution, an upper limit of total transmit power for wireless power transfer can be reached within the 500 kHz bandwidth, and this is a maximum-power wireless power transfer manner that occupies a small bandwidth.

In a possible implementation, Nsc=161, Ndc=1, and the plan of the subcarriers for wireless power transfer is {-80:-1, 1:80}; or Nsc=163, Ndc=3, and the plan of the subcarriers for wireless power transfer is {-81:-2, 2:81}; or Nsc=159, Ndc=0, and the plan of the subcarriers for wireless power transfer is {-79:79}.

In a possible implementation, the bandwidth of the PPDU is 500 kHz, the subcarrier spacing is 312.5 kHz/N, 80≤N≤104, and Nsc≤500*N/312.5.

In a possible implementation, N=100, Nsc=155, Ndc=1, and the plan of the subcarriers for wireless power transfer is {-77:-1, 1:77}; or N=100, Nsc=155, Ndc=0, and the plan of the subcarriers for wireless power transfer is {-77:77}.

In a possible implementation, the first bandwidth is less than or equal to 1 MHz, a clock rate corresponding to the PPDU is 1/N of a clock rate in the VHT/HE/EHT PHY standard, and the subcarrier spacing in the first bandwidth is from 3.0048 kHz to 3.9063 kHz, where N is an integer greater than 1.

In the solution, the upper limit of the total transmit power for wireless power transfer can be reached within the 1 MHz bandwidth, thereby avoiding a communication conflict with an existing 1 MHz bandwidth communication device due to different bandwidths.

In a possible implementation, generating the PPDU includes: generating the PPDU based on the subcarrier spacing in the first bandwidth and a plan of the subcarriers for wireless power transfer. The subcarrier spacing in the first bandwidth is determined by performing 1/N clock rate conversion on an 80 MHz PPDU in the VHT PHY standard, the subcarrier spacing is 312.5 kHz/N, and 80≤N≤104; and the plan of the subcarriers for wireless power transfer is M subcarriers in {-122:-2, 2:122}, where M≥159. Alternatively, the subcarrier spacing in the first bandwidth is determined by performing 1/N clock rate conversion on a 20 MHz PPDU in the HE/EHT PHY standard, the subcarrier spacing is 78.125 kHz/N, and 20≤N≤26; and the plan of the subcarriers for wireless power transfer is M subcarriers in {-122:-2, 2:122}, where M≥159.

In a possible implementation, the first bandwidth is less than or equal to 1 MHz, a clock rate corresponding to the PPDU is 1/N of a clock rate in the VHT/HE/EHT PHY standard, and the subcarrier spacing in the first bandwidth is from 0.2441 kHz to 1.9531 kHz, where N is an integer greater than 1.

In a possible implementation, generating the PPDU includes: generating the PPDU based on the subcarrier spacing in the first bandwidth. The subcarrier spacing in the first bandwidth is determined by performing 1/160 clock rate conversion on a 160 MHz PPDU in the VHT PHY standard, and the subcarrier spacing is 312.5 kHz/160. Alternatively, the subcarrier spacing in the first bandwidth is determined by performing 1/40 clock rate conversion on a 40 MHz PPDU in the HE/EHT PHY standard, and the subcarrier spacing is 78.125 kHz/40. Alternatively, the subcarrier spacing in the first bandwidth is determined by performing 1/80 clock rate conversion on an 80 MHz PPDU in the HE/EHT PHY standard, and the subcarrier spacing is 78.125 kHz/80. Alternatively, the subcarrier spacing in the first bandwidth is determined by performing 1/160 clock rate conversion on a 160 MHz PPDU in the HE/EHT PHY standard, and the subcarrier spacing is 78.125 kHz/160. Alternatively, the subcarrier spacing in the first bandwidth is determined by performing 1/320 clock rate conversion on a 320 MHz PPDU in the HE/EHT PHY standard, and the subcarrier spacing is 78.125 kHz/320.

In a possible implementation, the first bandwidth is greater than 1 MHz and less than or equal to 2 MHz, a clock rate corresponding to the PPDU is 1/N of a clock rate in the VHT/HE/EHT PHY standard, and the subcarrier spacing in the first bandwidth is from 6.0096 kHz to 7.8125 kHz, where N is an integer greater than 1.

In the solution, the upper limit of the total transmit power for wireless power transfer can be reached within the 2 MHz bandwidth, thereby avoiding a communication conflict with an existing 2 MHz bandwidth communication device due to different bandwidths.

In a possible implementation, generating the PPDU includes: generating the PPDU based on the subcarrier spacing in the first bandwidth and a plan of the subcarriers for wireless power transfer. The subcarrier spacing in the first bandwidth is determined by performing 1/N clock rate conversion on an 80 MHz PPDU in the VHT PHY standard, the subcarrier spacing is 312.5 kHz/N, and 40≤N≤52; and the plan of the subcarriers for wireless power transfer is M subcarriers in {-122:-2, 2:122}, where M≥159. Alternatively, the subcarrier spacing in the first bandwidth is determined by performing 1/N clock rate conversion on a 20 MHz PPDU in the HE/EHT PHY standard, the subcarrier spacing is 78.125 kHz/N, and 10≤N≤13; and the plan of the subcarriers for wireless power transfer is M subcarriers in {-122:-2, 2:122}, where M≥159.

In a possible implementation, the first bandwidth is greater than 1 MHz and less than or equal to 2 MHz, a clock rate corresponding to the PPDU is 1/N of a clock rate in the VHT/HE/EHT PHY standard, and the subcarrier spacing in the first bandwidth is from 0.4882 kHz to 3.9062 kHz, where N is an integer greater than 1.

In a possible implementation, generating the PPDU includes: generating the PPDU based on the subcarrier spacing in the first bandwidth. The subcarrier spacing in the first bandwidth is determined by performing 1/80 clock rate conversion on a 160 MHz PPDU in the VHT PHY standard, and the subcarrier spacing is 312.5 kHz/80. Alternatively, the subcarrier spacing in the first bandwidth is determined by performing 1/20 clock rate conversion on a 40 MHz PPDU in the HE/EHT PHY standard, and the subcarrier spacing is 78.125 kHz/20. Alternatively, the subcarrier spacing in the first bandwidth is determined by performing 1/40 clock rate conversion on an 80 MHz PPDU in the HE/EHT PHY standard, and the subcarrier spacing is 78.125 kHz/40. Alternatively, the subcarrier spacing in the first bandwidth is determined by performing 1/80 clock rate conversion on a 160 MHz PPDU in the HE/EHT PHY standard, and the subcarrier spacing is 78.125 kHz/80. Alternatively, the subcarrier spacing in the first bandwidth is determined by performing 1/160 clock rate conversion on a 320 MHz PPDU in the HE/EHT PHY standard, and the subcarrier spacing is 78.125 kHz/160.

According to a second aspect, an embodiment of this application provides a communication apparatus. The apparatus may be a communication device or a module (for example, a chip) in the communication device. The apparatus has a function of implementing any one of the implementations of the first aspect. The function may be implemented by hardware, or may be implemented by hardware executing corresponding software. The hardware or the software includes one or more modules corresponding to the function.

According to a third aspect, an embodiment of this application provides a communication apparatus, including units or means configured to perform steps of any one of the implementations in the first aspect.

According to a fourth aspect, an embodiment of this application provides a communication apparatus, including a processor and an interface circuit. The processor is configured to communicate with another apparatus through the interface circuit, and perform any implementation of the first aspect. There are one or more processors.

Optionally, the communication apparatus may further include a memory configured to store computer instructions. The memory is coupled to the processor, and the processor executes the computer instructions stored in the memory, to enable the apparatus to perform any implementation of the first aspect.

According to a fifth aspect, an embodiment of this application further provides a computer program product. The computer program product includes a computer program or instructions. When the computer program or the instructions are run by a communication apparatus, any implementation of the first aspect is performed.

According to a sixth aspect, an embodiment of this application further provides a computer-readable storage medium. The computer-readable storage medium stores instructions. When the instructions are run on a communication apparatus, any implementation of the first aspect is performed.

According to a seventh aspect, this application provides a chip (or a chip system). The chip includes a processor, the processor is coupled to a memory, the memory stores a computer program, and the processor is configured to invoke a part or all of the computer program in the memory, to perform any implementation of the first aspect.

### BRIEF DESCRIPTION OF DRAWINGS

FIG. 1 is a diagram of a network structure according to an embodiment of this application;
FIG. 2 is a schematic flowchart of a communication method according to an embodiment of this application;
FIG. 3 is a diagram of a structure of a communication apparatus according to an embodiment of this application; and
FIG. 4 is a diagram of a structure of a communication apparatus according to an embodiment of this application.

### DESCRIPTION OF EMBODIMENTS

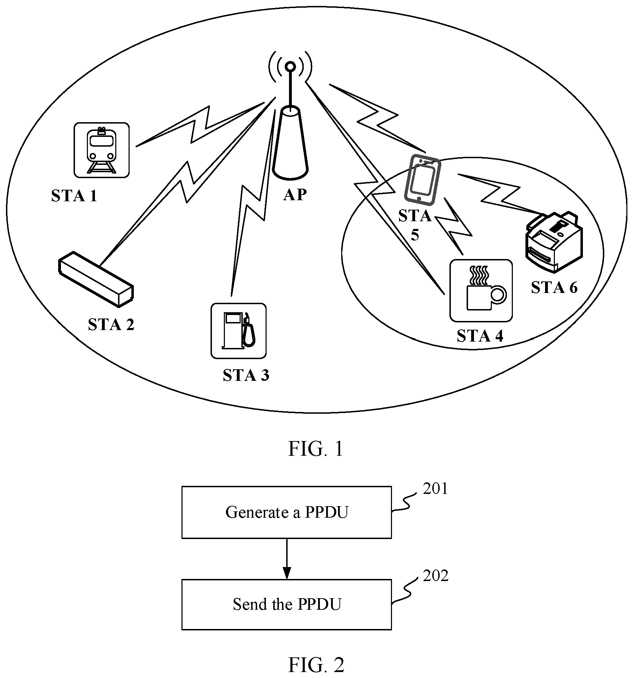

FIG. 1 is a diagram of a network structure according to an embodiment of this application. The network structure may include one or more access point (access point, AP) stations and one or more non-access point stations (non-access point stations, non-AP STAs). For ease of description, in this specification, the access point station is referred to as an access point (AP), and the non-access point station is referred to as a station (STA). In FIG. 1, the network structure including one AP and six stations (a STA 1, a STA 2, a STA 3, a STA 4, a STA 5, and a STA 6) is used as an example for description.

The access point may be an access point used by a terminal device (like a mobile phone) to access a wired (or wireless) network, and is mainly deployed at home, in a building, and in a park. A typical coverage radius is tens of meters to a hundred meters. Certainly, the access point may alternatively be deployed outdoors. The access point is equivalent to a bridge that connects a wired network and a wireless network, and is mainly used to connect various wireless network clients together and then connect the wireless network to the Ethernet. Specifically, the access point may be a terminal device (like a mobile phone) or a network device (like a router) with a wireless fidelity (wireless fidelity, Wi-Fi) chip. The access point may be a device supporting the 802.11bn standard, or the access point may be a device supporting a plurality of wireless local area network (wireless local area network, WLAN) standards of the 802.11 family, for example, 802.11be, 802.11ax, 802.11n, 802.11g, 802.11b, and 802.11a. The access point in this application may be a VHT access point, a high-efficiency (high efficiency, HE) access point, or an extremely high throughput (extremely high throughput, EHT) access point, or may be an access point applicable to a future generation Wi-Fi standard.

The station may be a wireless communication chip, a wireless sensor, a wireless communication terminal, or the like, and may also be referred to as a user. For example, the station may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, or a computer supporting a Wi-Fi communication function. Optionally, the station may support the 802.11bn standard, and the station may also support a plurality of WLAN standards of the 802.11 family, such as 802.11be, 802.11ax, 802.11ac, 802.11n, 802.11g, 802.11b, and 802.11a. The station in this application may be a VHT station, an HE station, or an EHT station, or may be a station applicable to a future generation Wi-Fi standard.

For example, the access point and the station may be devices used in Internet of vehicles, Internet of things nodes, sensors, or the like in the Internet of things (Internet of things, IoT), smart cameras, smart remote controls, smart water or electricity meters, or the like in a smart home, sensors in a smart city, and the like.

Embodiments of this application are mainly described by using a network deployed in compliance with the IEEE 802.11 standards as an example. A person skilled in the art easily understands that various aspects of this application may be extended to other networks that use various standards or protocols, for example, Bluetooth (Bluetooth), high-performance radio LAN (high performance radio LAN, HIPERLAN), wide area network (wide area network, WAN), wireless local area network (wireless local area network, WLAN), personal area network (personal area network, PAN), or other networks that are currently known or developed in the future. Therefore, regardless of used coverage and a used wireless access protocol, various aspects provided in this application are applicable to any appropriate wireless network.

For ease of understanding of this application, the following describes nouns or terms in this application.

### 1. Bandwidth required for wireless power transfer

The 802.11 AMP study group currently plans to define a wireless power transfer manner in the sub-1 GHz frequency band to supply wireless power to low-power nodes within a short range. Increasing transmit power of a transmitter can improve operating efficiency of the low-power nodes during wireless energy harvesting. To protect human electromagnetic safety, the FCC specifies that power spectral density of sub-1 GHz communication devices during operation shall be less than 8 dBm/3 kHz, and the maximum transmit power shall be no more than 30 dBm. This means that to reach the maximum transmit power of 30 dBm, a required bandwidth is at least 3*10^((30-8)/10)=475.4680 kHz.

### 2. Channel bandwidth in the sub-1 GHz frequency band

The channel bandwidth in the sub-1 GHz frequency band indicates that frequencies within the channel bandwidth are below 1 GHz, that is, one or more segments are extracted from the sub-1 GHz frequency band as the channel bandwidth. For example, contiguous 500 kHz is extracted from the sub-1 GHz frequency band as the channel bandwidth.

The 500 kHz basic channel bandwidth is widely used worldwide. For example, FCC 15.247 specifies that for digital modulation devices operating in the 902 to 928 megahertz (MHz), 2400 to 2483.5 MHz, and 5725 to 5850 MHz frequency bands, the minimum 6 dB bandwidth shall be greater than or equal to 500 kHz. The *Catalogue and Technical Requirements for Micro-power Short Range Radio Transmission Equipment* issued by the Ministry of Industry and Information Technology of China specifies that power spectral density for an occupied bandwidth less than or equal to 200 kHz is 50 milliwatts (mW)/200 kHz, that is, 50 mW per 200 kHz; and power spectral density for an occupied bandwidth between 200 kHz and 500 kHz is 10 mW/100 kHz. Therefore, in a process of designing wireless power transfer signals in the sub-1 GHz frequency band, if a signal design is based on a bandwidth of 500 kHz or an integer multiple of 500 kHz, impact on channel contention of the existing operating design can be reduced.

### 3. Orthogonal frequency division multiplexing (orthogonal frequency division multiplexing, OFDM) guard interval

The 802.11ay standard specifies that, in a 60 GHz frequency band, in an OFDM 2.64 GHz enhanced directional multi-gigabit (enhanced directional multi-Gigabit, EDMG) PPDU, a proportion of a guard interval bandwidth to a total bandwidth is (2.16 GHz-355×5.15625 MHz)/2.16 GHz=15.26%. 2.16 GHz is the total bandwidth, 355 is a quantity of subcarriers (tones) for transmission, and 5.15625 MHz is a subcarrier spacing.

In 802.11ax/be, in a 20 MHz PPDU transmitted in a 2.4/2.5/2.6 GHz frequency band, a proportion of a guard interval bandwidth to a total bandwidth is 11/256=4.29%. 11 indicates a quantity of subcarriers occupied by guard intervals, and 256 indicates a total quantity of subcarriers in the 20 MHz bandwidth.

Currently, 802.11ah specifies that when a communication device operating at sub-1 GHz transmits PPDUs with channel bandwidths of 2 MHz, 4 MHz, 8 MHz, and 16 MHz, 20 MHz, 40 MHz, 80 MHz, and 160 MHz of a VHT physical layer (PHY) with a 1/10 clock rate are respectively used. In this case, a subcarrier spacing for transmission of the communication device operating at sub-1 GHz is a subcarrier spacing of the VHT PHY with the 1/10 clock rate. In other words, 312.5 kHz/10=31.25 kHz.

However, the subcarrier spacing 31.25 kHz is far greater than 3 kHz in the PSD requirement of 8 dBm/3 kHz in the FCC regulations. This means that more bandwidth resources need to be wasted to reach the maximum transmit power.

To resolve this problem, this application provides corresponding embodiments. The following provides detailed descriptions.

FIG. 2 is a schematic flowchart of a communication method according to an embodiment of this application. The method is performed by a communication device or a module (for example, a chip) of a communication device. The following uses an example in which the communication device performs the method for description.

The method includes the following steps.

Step 201: The communication device generates a PPDU.

Step 202: The communication device sends the PPDU.

The communication device operates in a frequency band below 1 GHz, that is, the operating frequency band is sub-1 GHz. A bandwidth of the PPDU is a first bandwidth, and a difference between a subcarrier spacing in the first bandwidth and 3 kHz is less than or equal to a first threshold.

That the difference between the subcarrier spacing in the first bandwidth and 3 kHz is less than or equal to the first threshold may also be understood as that the subcarrier spacing in the first bandwidth is close to 3 kHz. The subcarrier spacing in the first bandwidth may be greater than 3 kHz, or may be less than 3 kHz.

The first threshold is a positive number. When the subcarrier spacing in the first bandwidth is greater than 3 kHz, the difference between the subcarrier spacing in the first bandwidth and 3 kHz is the subcarrier spacing in the first bandwidth minus 3 kHz. When the subcarrier spacing in the first bandwidth is less than 3 kHz, the difference between the subcarrier spacing in the first bandwidth and 3 kHz is 3 kHz minus the subcarrier spacing in the first bandwidth.

According to the descriptions, a current subcarrier spacing 31.25 kHz is far greater than 3 kHz in the PSD requirement of 8 dBm/3 kHz in the FCC regulations. As a result, more bandwidth resources need to be wasted to reach the maximum transmit power. Therefore, in this application, the difference between the subcarrier spacing and 3 kHz is minimized. In an implementation, in this application, the first threshold may be set to be less than 28.25 kHz, that is, 31.25 kHz-3 kHz=28.25 kHz, so that the difference between the subcarrier spacing in the first bandwidth and 3 kHz can be reduced, thereby helping reduce a waste of bandwidth resources. For example, the first threshold is equal to 5 kHz, 10 kHz, or the like.

In an implementation, subcarriers in the first bandwidth include subcarriers for wireless power transfer and a direct current (direct current, DC) subcarrier. The direct current subcarrier may be a null subcarrier, and information transmitted on the null subcarrier is all 0. Alternatively, the direct current subcarrier may also be for wireless power transfer. In this case, information transmitted on the direct current subcarrier is not all 0, that is, may be partially 0 or may not be 0.

In this solution, the subcarrier spacing is close to 3 kHz in the PSD requirement of 8 dBm/3 kHz in the FCC regulations (that is, the difference between the subcarrier spacing and 3 kHz is less than or equal to the first threshold). Therefore, occupation of bandwidth resources can be reduced, thereby saving bandwidth resources and improving spectral efficiency.

In an implementation, the PPDU in Step 201 may be generated based on OFDM, and a method for generating and sending the PPDU may also be referred to as a method for generating and sending an OFDM-based sub-1 GHz frequency band wireless power transfer signal (that is, the PPDU).

The following describes three different cases based on different sizes of the first bandwidth.

Case 1: The first bandwidth is 500 kHz.

For the case 1, this application provides the following two different implementations: an implementation 1 and an implementation 2.

Implementation 1: The subcarrier spacing in the first bandwidth is predefined as 3 kHz.

In the implementation 1, a plan (tone plan) of the subcarriers for wireless power transfer in the subcarriers in the first bandwidth is defined as {(-floor((Nsc-Ndc)/2)-floor(Ndc/2)):(-floor(Ndc/2)-1), (floor(Ndc/2)+1):(floor((Nsc-Ndc)/2)+floor(Ndc/2))}.

Nsc represents a quantity of subcarriers in the first bandwidth, Ndc represents a quantity of direct current subcarriers in the subcarriers in the first bandwidth, and floor represents rounding down. {a:b} represents {a, a+1, a+2, ..., b-2, b-1, b}, that is, includes a, a+1, a+2, ..., b-2, b-1, and b. For example, {1:10} includes 1, 2, 3, 4, 5, 6, 7, 8, 9, and 10. For example, a=-floor((Nsc-Ndc)/2)-floor(Ndc/2), and b=-floor(Ndc/2)-1. For another example, a=floor(Ndc/2)+1, and b=floor((Nsc-Ndc)/2)+floor(Ndc/2).

For example, in the implementation 1, a fast Fourier transform (Fast Fourier Transform, FFT) size corresponding to the first bandwidth is 256, and Nsc≥159, that is, Nsc is equal to 159, 160, 161, .... The FFT size is determined according to the following method: 500 kHz/3 kHz≈166.67. Because 2⁷<166.67<2⁸, 2⁸ is the smallest power of 2 that is greater than 166.67. Therefore, the FFT size is determined as 2⁸, that is, 256.

For example, in the implementation 1, Ndc≤3, that is, Ndc is equal to 0, 1, 2, or 3.

In the implementation 1, a guard tone ratio (Guard tone ratio) is (500-3*(Nsc-1))/500.

For the implementation 1, the following provides some specific examples.

### Example 1.1

The first bandwidth is 500 kHz, the subcarrier spacing is 3 kHz, and the FFT size is 256.

Nsc=161, Ndc=1, and the direct current subcarrier is a null subcarrier and is not for wireless power transfer.

The plan of the subcarriers for wireless power transfer is {-80:-1, 1:80}.

The guard tone ratio is (500-3×160)/500=4%.

### Example 1.2

The first bandwidth is 500 kHz, the subcarrier spacing is 3 kHz, and the FFT size is 256. Nsc=163, Ndc=3, and the direct current subcarrier is a null subcarrier and is not for wireless power transfer.

The plan of the subcarriers for wireless power transfer is {-81:-2, 2:81}.

The guard tone ratio is (500-3×162)/500=2.8%.

### Example 1.3

The first bandwidth is 500 kHz, the subcarrier spacing is 3 kHz, and the FFT size is 256. Nsc=159, Ndc=0 (which may also be considered that the direct current subcarrier is for wireless power transfer, and in this case, the quantity of direct current subcarriers is not limited).

The plan of the subcarriers for wireless power transfer is {-79:79}.

The guard tone ratio is (500-3×158)/500=5.2%.

It may be understood that, for the implementation 1, this application provides a communication method. In the method, a communication device generates a PPDU and sends the PPDU. A bandwidth of the PPDU is 500 kHz, a subcarrier spacing in the bandwidth is 3 kHz, and an FFT size corresponding to the bandwidth is 256. The plan of the subcarriers for wireless power transfer in the subcarriers in the bandwidth is {(-floor((Nsc-Ndc)/2)-floor(Ndc/2)):(-floor(Ndc/2)-1), (floor(Ndc/2)+1):(floor((Nsc-Ndc)/2)+floor(Ndc/2))}. Nsc represents a quantity of subcarriers in the bandwidth, Ndc represents a quantity of direct current subcarriers in the subcarriers in the bandwidth, and floor represents rounding down. Nsc≥159, that is, Nsc=159, 160, 161, .... Ndc≤3, that is, Ndc is equal to 0, 1, 2, or 3. For a specific example of the plan of the subcarriers for wireless power transfer in the subcarriers in the bandwidth, refer to the foregoing descriptions. When Nsc=161, and Ndc=1, the plan of the subcarriers for wireless power transfer is {-80:-1, 1:80}. When Nsc=163, and Ndc=3, the plan of the subcarriers for wireless power transfer is {-81:-2, 2:81}. When Nsc=159, and Ndc=0, the plan of the subcarriers for wireless power transfer is {-79:79}.

Implementation 2: The subcarrier spacing in the first bandwidth is determined through conversion of a clock rate in an 802.11 standard.

In the implementation 2, a plan of the subcarriers for wireless power transfer in the subcarriers in the first bandwidth is defined as {(-floor((Nsc-Ndc)/2)-floor(Ndc/2)):(-floor(Ndc/2)-1), (floor(Ndc/2)+1):(floor((Nsc-Ndc)/2)+floor(Ndc/2))}.

Nsc represents a quantity of subcarriers in the first bandwidth, Ndc represents a quantity of direct current subcarriers in the subcarriers in the first bandwidth, and floor represents rounding down.

{a:b} represents {a, a+1, a+2, ..., b-2, b-1, b}, that is, includes a, a+1, a+2, ..., b-2, b-1, and b. For example, {1:10} includes 1, 2, 3, 4, 5, 6, 7, 8, 9, and 10.

For example, in the implementation 2, an FFT size corresponding to the first bandwidth is 256. For example, in the implementation 2, the subcarrier spacing in the first bandwidth is 312.5 kHz/N, 80≤N≤104, and Nsc≤500*N/312.5. Both N and Nsc are positive integers. N is a clock conversion ratio. This may be implemented using 1/N of a clock rate in the 802.11ac standard.

For example, in the implementation 2, Ndc≤3, that is, Ndc is equal to 0, 1, 2, or 3.

In the implementation 2, a guard tone ratio is (500-312.5/N*(Nsc-1))/500.

For the implementation 2, the following provides some specific examples.

### Example 2.1

The first bandwidth is 500 kHz, N=100, the subcarrier spacing is 3.125 kHz, and the FFT size is 256.

Nsc=155, Ndc=1, and the direct current subcarrier is a null subcarrier and is not for wireless power transfer.

The plan of the subcarriers for wireless power transfer is {-77:-1, 1:77}.

The guard tone ratio is (500-312.5/100*154)/500=3.75%.

### Example 2.2

The first bandwidth is 500 kHz, N=100, the subcarrier spacing is 3.125 kHz, and the FFT size is 256.

Nsc=155, Ndc=0 (which may also be considered that the direct current subcarrier is for wireless power transfer, and in this case, the quantity of direct current subcarriers is not limited).

The plan of the subcarriers for wireless power transfer is {-77:77}.

The guard tone ratio is (500-312.5/100*154)/500=3.75%.

In the example, N=100 is used as an example for description. Transmissions of PPDUs with a 500 kHz channel bandwidth are modulated the same way as 20 MHz, 40 MHz, 80 MHz, and 160 MHz modes as specified in the VHT/HE/EHT PHY standard, except with a 1/N clock rate.

It may be understood that, for the implementation 2, this application provides a communication method. In the method, a communication device generates a PPDU and sends the PPDU. A bandwidth of the PPDU is 500 kHz, a subcarrier spacing in the bandwidth is 312.5 kHz/N, 80≤N≤104, and an FFT size corresponding to the bandwidth is 256. The plan of the subcarriers for wireless power transfer in the subcarriers in the bandwidth is {(-floor((Nsc-Ndc)/2)-floor(Ndc/2)):(-floor(Ndc/2)-1), (floor(Ndc/2)+1):(floor((Nsc-Ndc)/2)+floor(Ndc/2))}. Nsc represents a quantity of subcarriers in the bandwidth, Ndc represents a quantity of direct current subcarriers in the subcarriers in the bandwidth, and floor represents rounding down. Nsc≤500*N/312.5. Ndc≤3, that is, Ndc is equal to 0, 1, 2, or 3. For a specific example of the plan of the subcarriers for wireless power transfer in the subcarriers in the bandwidth, refer to the foregoing descriptions. When Nsc=155, and Ndc=1, the plan of the subcarriers for wireless power transfer is {-77:-1, 1:77}. When Nsc=155, and Ndc=0, the plan of the subcarriers for wireless power transfer is {-77:77}.

Case 2: The first bandwidth is less than or equal to 1 MHz and greater than 500 kHz.

For the case 2, the following describes two different implementations: an implementation 3 and an implementation 4.

Implementation 3: A clock rate corresponding to the PPDU generated in Step 201 is 1/N of a clock rate in the VHT/HE/EHT PHY standard, and the subcarrier spacing in the first bandwidth is from 3.0048 kHz to 3.9063 kHz, where N is an integer greater than 1.

Based on the implementation 3, Step 201 may be specifically: The communication device generates the PPDU based on the subcarrier spacing in the first bandwidth and a plan of the subcarriers for wireless power transfer.

In an implementation, the subcarrier spacing in the first bandwidth is determined by performing 1/N clock rate conversion on an 80 MHz PPDU in the VHT PHY standard, the subcarrier spacing is 312.5 kHz/N, and 80≤N≤104. The plan of the subcarriers for wireless power transfer is M subcarriers in {-122:-2, 2:122}, where M≥159. For this implementation, the following provides Example 3.1 and Example 3.2.

### Example 3.1

The first bandwidth is 1 MHz, and the subcarrier spacing is 3.9063 kHz. N=80, and conversion is performed using 1/80 of a clock rate of 80 MHz in the VHT standard. The plan of the subcarriers for wireless power transfer is M subcarriers in {-122:-2, 2:122}, where M≥159. A quantity of direct current subcarriers is equal to 3.

### Example 3.2

The first bandwidth is 769.2 kHz, and the subcarrier spacing is 3.0048 kHz. N=104, and conversion is performed using 1/104 of a clock rate of 80 MHz in the VHT standard. The plan of the subcarriers for wireless power transfer is M subcarriers in {-122:-2, 2:122}, where M≥159. A quantity of direct current subcarriers is equal to 3.

In another implementation, the subcarrier spacing in the first bandwidth is determined by performing 1/N clock rate conversion on a 20 MHz PPDU in the HE/EHT PHY standard, the subcarrier spacing is 78.125 kHz/N, and 20≤N≤26. The plan of the subcarriers for wireless power transfer is M subcarriers in {-122:-2, 2:122}, where M≥159. For this implementation, the following provides Example 3.3 and Example 3.4.

### Example 3.3

The first bandwidth is 1 MHz, and the subcarrier spacing is 3.9063 kHz. N=20, and conversion is performed using 1/20 of a clock rate of 20 MHz in the HE/EHT standard. The plan of the subcarriers for wireless power transfer is M subcarriers in {-122:-2, 2:122}, where M≥159. A quantity of direct current subcarriers is equal to 3.

### Example 3.4

The first bandwidth is 769.2 kHz, and the subcarrier spacing is 3.0048 kHz. N=26, and conversion is performed using 1/26 of a clock rate of 20 MHz in the HE/EHT standard. The plan of the subcarriers for wireless power transfer is M subcarriers in {-122:-2, 2:122}, where M≥159. A quantity of direct current subcarriers is equal to 3.

In the example, an example in which the first bandwidth is 769.2 kHz or 1 MHz, and N is equal to 20, 26, 80, or 104 is used for description. Transmissions of PPDUs with channel bandwidths from 500 kHz to 1 MHz are modulated the same way as 20 MHz, 40 MHz, 80 MHz, and 160 MHz modes as specified in the VHT/HE/EHT PHY standard, except with a 1/N clock rate.

It may be understood that, for the implementation 3, this application provides a communication method. In the method, a communication device generates a PPDU and sends the PPDU. A bandwidth of the PPDU is greater than 500 kHz and less than or equal to 1 MHz, and a subcarrier spacing in the bandwidth is 312.5 kHz/N, and 80≤N≤104, or a subcarrier spacing in the bandwidth is 78.125 kHz/N, and 20≤N≤26. The plan of the subcarriers for wireless power transfer in the subcarriers in the bandwidth is M subcarriers in {-122:-2, 2:122}, where M≥159. For a specific example of the plan of the subcarriers for wireless power transfer in the subcarriers in the bandwidth, refer to the foregoing descriptions. When the first bandwidth is 1 MHz, and the subcarrier spacing is 3.9063 kHz, conversion is performed using 1/80 of a clock rate of 80 MHz in the VHT standard, or using 1/20 of a clock rate of 20 MHz in the HE/EHT standard. When the first bandwidth is 769.2 kHz, and the subcarrier spacing is 3.0048 kHz, conversion is performed using 1/104 of a clock rate of 80 MHz in the VHT standard, or using 1/26 of a clock rate of 20 MHz in the HE/EHT standard.

Implementation 4: A clock rate corresponding to the PPDU generated in Step 201 is 1/N of a clock rate in the VHT/HE/EHT PHY standard, and the subcarrier spacing in the first bandwidth is from 0.2441 kHz to 1.9531 kHz, where N is an integer greater than 1.

Based on the implementation 4, Step 201 may be specifically: The communication device generates the PPDU based on the subcarrier spacing in the first bandwidth.

In an implementation, the subcarrier spacing in the first bandwidth is determined by performing 1/160 clock rate conversion on a 160 MHz PPDU in the VHT PHY standard, the subcarrier spacing is 312.5 kHz/160, and a quantity of subcarriers in the first bandwidth is 512. The modulation scheme is the same as that of 160 MHz in the VHT PHY standard, except with a 1/160 clock rate. In another implementation, the subcarrier spacing in the first bandwidth is determined by performing 1/40 clock rate conversion on a 40 MHz PPDU in the HE/EHT PHY standard, the subcarrier spacing is 78.125 kHz/40, and a quantity of subcarriers in the first bandwidth is 512. The modulation scheme is the same as that of 40 MHz in the HE/EHT PHY standard, except with a 1/40 clock rate.

In another implementation, the subcarrier spacing in the first bandwidth is determined by performing 1/80 clock rate conversion on an 80 MHz PPDU in the HE/EHT PHY standard, the subcarrier spacing is 78.125 kHz/80, and a quantity of subcarriers in the first bandwidth is 1024. The modulation scheme is the same as that of 80 MHz in the HE/EHT PHY standard, except with a 1/80 clock rate.

In another implementation, the subcarrier spacing in the first bandwidth is determined by performing 1/160 clock rate conversion on a 160 MHz PPDU in the HE/EHT PHY standard, the subcarrier spacing is 78.125 kHz/160, and a quantity of subcarriers in the first bandwidth is 2048. The modulation scheme is the same as that of 160 MHz in the HE/EHT PHY standard, except with a 1/160 clock rate.

In another implementation, the subcarrier spacing in the first bandwidth is determined by performing 1/320 clock rate conversion on a 320 MHz PPDU in the HE/EHT PHY standard, the subcarrier spacing is 78.125 kHz/320, and a quantity of subcarriers in the first bandwidth is 4096. The modulation scheme is the same as that of 320 MHz in the HE/EHT PHY standard, except with a 1/320 clock rate.

Case 3: The first bandwidth is less than or equal to 2 MHz and greater than 1 MHz.

For the case 3, the following describes two different implementations: an implementation 5 and an implementation 6.

Implementation 5: A clock rate corresponding to the PPDU generated in Step 201 is 1/N of a clock rate in the VHT/HE/EHT PHY standard, and the subcarrier spacing in the first bandwidth is from 6.0096 kHz to 7.8125 kHz, where N is an integer greater than 1.

Based on the implementation 5, Step 201 may be specifically: The communication device generates the PPDU based on the subcarrier spacing in the first bandwidth and a plan of the subcarriers for wireless power transfer.

In an implementation, the subcarrier spacing in the first bandwidth is determined by performing 1/N clock rate conversion on an 80 MHz PPDU in the VHT PHY standard, the subcarrier spacing is 312.5 kHz/N, and 40≤N≤52. The plan of the subcarriers for wireless power transfer is M subcarriers in {-122:-2, 2:122}, where M≥159. For this implementation, the following provides Example 4.1 and Example 4.2.

### Example 4.1

The first bandwidth is 2 MHz, and the subcarrier spacing is 7.8126 kHz. N=40, and conversion is performed using 1/40 of a clock rate of 80 MHz in the VHT standard. The plan of the subcarriers for wireless power transfer is M subcarriers in {-122:-2, 2:122}, where M≥159. A quantity of direct current subcarriers is equal to 3.

### Example 4.2

The first bandwidth is 1.5384 MHz, and the subcarrier spacing is 6.0096 kHz. N=52, and conversion is performed using 1/52 of a clock rate of 80 MHz in the VHT standard. The plan of the subcarriers for wireless power transfer is M subcarriers in {-122:-2, 2:122}, where M≥159. A quantity of direct current subcarriers is equal to 3.

In another implementation, the subcarrier spacing in the first bandwidth is determined by performing 1/N clock rate conversion on a 20 MHz PPDU in the HE/EHT PHY standard, the subcarrier spacing is 78.125 kHz/N, and 10≤N≤13. The plan of the subcarriers for wireless power transfer is M subcarriers in {-122:-2, 2:122}, where M≥159. For this implementation, the following provides Example 4.3 and Example 4.4.

### Example 4.3

The first bandwidth is 2 MHz, and the subcarrier spacing is 7.8125 kHz. N=10, and conversion is performed using 1/10 of a clock rate of 20 in the HE/EHT VHT standard. The plan of the subcarriers for wireless power transfer is M subcarriers in {-122:-2, 2:122}, where M≥159. A quantity of direct current subcarriers is equal to 3.

### Example 4.4

The first bandwidth is 1.5384 MHz, and the subcarrier spacing is 6.0096 kHz. N=13, and conversion is performed using 1/13 of a clock rate of 20 MHz in the HE/EHT standard. The plan of the subcarriers for wireless power transfer is M subcarriers in {-122:-2, 2:122}, where M≥159. A quantity of direct current subcarriers is equal to 3.

In the example, an example in which the first bandwidth is 1.5384 MHz or 2 MHz, and N is equal to 10, 13, 40, or 52 is used for description. Transmissions of PPDUs with channel bandwidths from 1 MHz to 2 MHz are modulated the same way as 20 MHz, 40 MHz, 80 MHz, and 160 MHz modes as specified in the VHT/HE/EHT PHY standard, except with a 1/N clock rate.

It may be understood that, for the implementation 5, this application provides a communication method. In the method, a communication device generates a PPDU and sends the PPDU. A bandwidth of the PPDU is greater than 1 MHz and less than or equal to 2 MHz, and a subcarrier spacing in the bandwidth is 312.5 kHz/N, and 40≤N≤52, or a subcarrier spacing in the bandwidth is 78.125 kHz/N, and 10≤N≤13. The plan of the subcarriers for wireless power transfer in the subcarriers in the bandwidth is M subcarriers in {-122:-2, 2:122}, where M≥159. For a specific example of the plan of the subcarriers for wireless power transfer in the subcarriers in the bandwidth, refer to the foregoing descriptions. When the first bandwidth is 2 MHz, and the subcarrier spacing is 7.8125 kHz, conversion is performed using 1/40 of a clock rate of 80 MHz in the VHT standard, or using 1/10 of a clock rate of 20 MHz in the HE/EHT standard. When the first bandwidth is 1.5384 MHz, and the subcarrier spacing is 6.0096 kHz, conversion is performed using 1/52 of a clock rate of 80 MHz in the VHT standard, or using 1/13 of a clock rate of 20 MHz in the HE/EHT standard.

Implementation 6: A clock rate corresponding to the PPDU generated in Step 201 is 1/N of a clock rate in the VHT/HE/EHT PHY standard, and the subcarrier spacing in the first bandwidth is from 0.4882 kHz to 3.9062 kHz, where N is an integer greater than 1.

Based on the implementation 6, Step 201 may be specifically: The communication device generates the PPDU based on the subcarrier spacing in the first bandwidth.

In an implementation, the subcarrier spacing in the first bandwidth is determined by performing 1/80 clock rate conversion on a 160 MHz PPDU in the VHT PHY standard, the subcarrier spacing is 312.5 kHz/80, and a quantity of subcarriers in the first bandwidth is 512. The modulation scheme is the same as that of 160 MHz in the VHT PHY standard, except with a 1/80 clock rate.

In another implementation, the subcarrier spacing in the first bandwidth is determined by performing 1/20 clock rate conversion on a 40 MHz PPDU in the HE/EHT PHY standard, the subcarrier spacing is 78.125 kHz/20, and a quantity of subcarriers in the first bandwidth is 512. The modulation scheme is the same as that of 40 MHz in the HE/EHT PHY standard, except with a 1/20 clock rate.

In another implementation, the subcarrier spacing in the first bandwidth is determined by performing 1/40 clock rate conversion on an 80 MHz PPDU in the HE/EHT PHY standard, the subcarrier spacing is 78.125 kHz/40, and a quantity of subcarriers in the first bandwidth is 1024. The modulation scheme is the same as that of 80 MHz in the HE/EHT PHY standard, except with a 1/40 clock rate.

In another implementation, the subcarrier spacing in the first bandwidth is determined by performing 1/80 clock rate conversion on a 160 MHz PPDU in the HE/EHT PHY standard, the subcarrier spacing is 78.125 kHz/80, and a quantity of subcarriers in the first bandwidth is 2048. The modulation scheme is the same as that of 160 MHz in the HE/EHT PHY standard, except with a 1/80 clock rate.

In another implementation, the subcarrier spacing in the first bandwidth is determined by performing 1/160 clock rate conversion on a 320 MHz PPDU in the HE/EHT PHY standard, the subcarrier spacing is 78.125 kHz/160, and a quantity of subcarriers in the first bandwidth is 4096. The modulation scheme is the same as that of 320 MHz in the HE/EHT PHY standard, except with a 1/160 clock rate.

The foregoing examples in this embodiment of this application have the following beneficial effect: First, the subcarrier spacing is close to 3 kHz in the PSD requirement of 8 dBm/3 kHz in the FCC regulations (that is, the difference between the subcarrier spacing and 3 kHz is less than or equal to the first threshold). Therefore, occupation of bandwidth resources can be reduced, thereby saving bandwidth resources and improving spectral efficiency.

Second, the quantity of the subcarriers for wireless power transfer is minimized to construct a frequency-domain short sequence. The frequency-domain short sequence includes a plurality of elements, and each element corresponds to one subcarrier. Because a short sequence can easily construct a sequence with a low peak-to-average power ratio (Peak to Average Power Ratio, PAPR), operating efficiency of a transmit power amplifier can be improved. In addition, a sequence with a high PAPR can also be constructed based on the short sequence, thereby improving radio frequency (Radio Frequency, RF)-direct current (Direct Current, DC) energy conversion efficiency at a receive end.

Third, in a part of the foregoing implementations, the quantity of subcarriers in the bandwidth of the PPDU is required to be greater than or equal to 159, thereby resolving the total power limit specified by the FCC.

Fourth, in a part of the foregoing implementations, the guard tone ratio needs to be less than the guard tone ratio (that is, 4.29%) in the 2.4/2.5/2.6 GHz frequency domain bandwidth, thereby improving spectral efficiency.

It may be understood that, to implement the functions in the foregoing embodiments, the communication device includes a corresponding hardware structure and/or software module for performing each function. A person skilled in the art should be easily aware that, in this application, the units and method steps in the examples described with reference to embodiments disclosed in this application can be implemented in a form of hardware or a combination of hardware and computer software. Whether a function is performed by hardware or hardware driven by computer software depends on particular application scenarios and design constraints of the technical solutions.

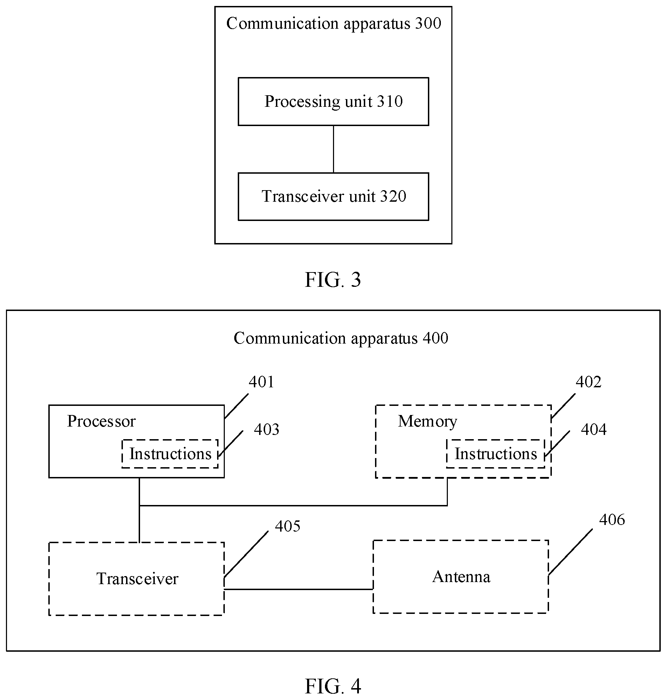

FIG. 3 and FIG. 4 are diagrams of structures of possible communication apparatuses according to embodiments of this application. The communication apparatuses may be configured to implement functions of each communication device in the foregoing method embodiment. Therefore, beneficial effect of the foregoing method embodiment can also be achieved. In embodiments of this application, the communication apparatus may be a communication device, or may be a module (for example, a chip) used in the communication device.

As shown in FIG. 3, the communication apparatus 300 includes a processing unit 310 and a transceiver unit 320. The communication apparatus 300 is configured to implement a function of the communication device in the foregoing method embodiment.

When the communication apparatus 300 is configured to implement a function of the communication device in the foregoing method embodiment, the processing unit 310 is configured to generate a PPDU, and the transceiver unit 320 is configured to send the PPDU. The communication device operates in a frequency band below 1 GHz, a bandwidth of the PPDU is a first bandwidth, and a difference between a subcarrier spacing in the first bandwidth and 3 kHz is less than or equal to a first threshold.

In a possible implementation, subcarriers in the first bandwidth include subcarriers for wireless power transfer and a direct current subcarrier, and the direct current subcarrier is a null subcarrier or for wireless power transfer.

In a possible implementation, a plan of the subcarriers for wireless power transfer is {(-floor((Nsc-Ndc)/2)-floor(Ndc/2)):(-floor(Ndc/2)-1), (floor(Ndc/2)+1):(floor((Nsc-Ndc)/2)+floor(Ndc/2))}. Nsc represents a quantity of subcarriers in the first bandwidth, Ndc represents a quantity of direct current subcarriers in the subcarriers in the first bandwidth, and floor represents rounding down. In a possible implementation, the first bandwidth is 500 kHz, the subcarrier spacing in the first bandwidth is 3 kHz, a fast Fourier transform FFT size corresponding to the first bandwidth is 256, and Nsc≥159.

In a possible implementation, Nsc=161, Ndc=1, and the plan of the subcarriers for wireless power transfer is {-80:-1, 1:80}; or Nsc=163, Ndc=3, and the plan of the subcarriers for wireless power transfer is {-81:-2, 2:81}; or Nsc=159, Ndc=0, and the plan of the subcarriers for wireless power transfer is {-79:79}.

In a possible implementation, the bandwidth of the PPDU is 500 kHz, the subcarrier spacing is 312.5 kHz/N, 80≤N≤104, and Nsc≤500*N/312.5.

In a possible implementation, N=100, Nsc=155, Ndc=1, and the plan of the subcarriers for wireless power transfer is {-77:-1, 1:77}; or N=100, Nsc=155, Ndc=0, and the plan of the subcarriers for wireless power transfer is {-77:77}.

In a possible implementation, the first bandwidth is less than or equal to 1 MHz, a clock rate corresponding to the PPDU is 1/N of a clock rate in the VHT/HE/EHT PHY standard, and the subcarrier spacing in the first bandwidth is from 3.0048 kHz to 3.9063 kHz, where N is an integer greater than 1.

In a possible implementation, that the processing unit 310 is configured to generate the PPDU specifically includes: The processing unit 310 is configured to generate the PPDU based on the subcarrier spacing in the first bandwidth and a plan of the subcarriers for wireless power transfer. The subcarrier spacing in the first bandwidth is determined by performing 1/N clock rate conversion on an 80 MHz PPDU in the VHT PHY standard, the subcarrier spacing is 312.5 kHz/N, and 80≤N≤104; and the plan of the subcarriers for wireless power transfer is M subcarriers in {-122:-2, 2:122}, where M≥159. Alternatively, the subcarrier spacing in the first bandwidth is determined by performing 1/N clock rate conversion on a 20 MHz PPDU in the HE/EHT PHY standard, the subcarrier spacing is 78.125 kHz/N, and 20≤N≤26; and the plan of the subcarriers for wireless power transfer is M subcarriers in {-122:-2, 2:122}, where M≥159.

In a possible implementation, the first bandwidth is less than or equal to 1 MHz, a clock rate corresponding to the PPDU is 1/N of a clock rate in the VHT/HE/EHT PHY standard, and the subcarrier spacing in the first bandwidth is from 0.2441 kHz to 1.9531 kHz, where N is an integer greater than 1.

In a possible implementation, that the processing unit 310 is configured to generate the PPDU specifically includes: The processing unit 310 is configured to generate the PPDU based on the subcarrier spacing in the first bandwidth. The subcarrier spacing in the first bandwidth is determined by performing 1/160 clock rate conversion on a 160 MHz PPDU in the VHT PHY standard, and the subcarrier spacing is 312.5 kHz/160. Alternatively, the subcarrier spacing in the first bandwidth is determined by performing 1/40 clock rate conversion on a 40 MHz PPDU in the HE/EHT PHY standard, and the subcarrier spacing is 78.125 kHz/40. Alternatively, the subcarrier spacing in the first bandwidth is determined by performing 1/80 clock rate conversion on an 80 MHz PPDU in the HE/EHT PHY standard, and the subcarrier spacing is 78.125 kHz/80. Alternatively, the subcarrier spacing in the first bandwidth is determined by performing 1/160 clock rate conversion on a 160 MHz PPDU in the HE/EHT PHY standard, and the subcarrier spacing is 78.125 kHz/160. Alternatively, the subcarrier spacing in the first bandwidth is determined by performing 1/320 clock rate conversion on a 320 MHz PPDU in the HE/EHT PHY standard, and the subcarrier spacing is 78.125 kHz/320.

In a possible implementation, the first bandwidth is greater than 1 MHz and less than or equal to 2 MHz, a clock rate corresponding to the PPDU is 1/N of a clock rate in the VHT/HE/EHT PHY standard, and the subcarrier spacing in the first bandwidth is from 6.0096 kHz to 7.8125 kHz, where N is an integer greater than 1.

In a possible implementation, that the processing unit 310 is configured to generate the PPDU specifically includes: The processing unit 310 is configured to generate the PPDU based on the subcarrier spacing in the first bandwidth and a plan of the subcarriers for wireless power transfer. The subcarrier spacing in the first bandwidth is determined by performing 1/N clock rate conversion on an 80 MHz PPDU in the VHT PHY standard, the subcarrier spacing is 312.5 kHz/N, and 40≤N≤52; and the plan of the subcarriers for wireless power transfer is M subcarriers in {-122:-2, 2:122}, where M≥159. Alternatively, the subcarrier spacing in the first bandwidth is determined by performing 1/N clock rate conversion on a 20 MHz PPDU in the HE/EHT PHY standard, the subcarrier spacing is 78.125 kHz/N, and 10≤N≤13; and the plan of the subcarriers for wireless power transfer is M subcarriers in {-122:-2, 2:122}, where M≥159.

In a possible implementation, the first bandwidth is greater than 1 MHz and less than or equal to 2 MHz, a clock rate corresponding to the PPDU is 1/N of a clock rate in the VHT/HE/EHT PHY standard, and the subcarrier spacing in the first bandwidth is from 0.4882 kHz to 3.9062 kHz, where N is an integer greater than 1.

In a possible implementation, that the processing unit 310 is configured to generate the PPDU specifically includes: The processing unit 310 is configured to generate the PPDU based on the subcarrier spacing in the first bandwidth. The subcarrier spacing in the first bandwidth is determined by performing 1/80 clock rate conversion on a 160 MHz PPDU in the VHT PHY standard, and the subcarrier spacing is 312.5 kHz/80. Alternatively, the subcarrier spacing in the first bandwidth is determined by performing 1/20 clock rate conversion on a 40 MHz PPDU in the HE/EHT PHY standard, and the subcarrier spacing is 78.125 kHz/20. Alternatively, the subcarrier spacing in the first bandwidth is determined by performing 1/40 clock rate conversion on an 80 MHz PPDU in the HE/EHT PHY standard, and the subcarrier spacing is 78.125 kHz/40. Alternatively, the subcarrier spacing in the first bandwidth is determined by performing 1/80 clock rate conversion on a 160 MHz PPDU in the HE/EHT PHY standard, and the subcarrier spacing is 78.125 kHz/80. Alternatively, the subcarrier spacing in the first bandwidth is determined by performing 1/160 clock rate conversion on a 320 MHz PPDU in the HE/EHT PHY standard, and the subcarrier spacing is 78.125 kHz/160.

For more detailed descriptions of the processing unit 310 and the transceiver unit 320, directly refer to the related descriptions in the foregoing method embodiment. Details are not described herein again.

FIG. 4 is a diagram of a structure of a communication apparatus according to an embodiment of this application. The communication apparatus 400 includes a processor 401, and optionally further includes at least one of a memory 402, a transceiver 405, and an antenna 406.

The transceiver 405 may be a transceiver unit, a transceiver machine, a transceiver circuit, or the like, and is configured to implement a transceiver function. The transceiver 405 may include a receiver and a transmitter. The receiver may be a receiver machine, a receiver circuit, or the like, and is configured to implement a receiving function. The transmitter may be a transmitter machine, a transmitter circuit, or the like, and is configured to implement a sending function.

The memory 402 may store a computer program (computer program), software code, or instructions 404. The computer program, software code, or instructions 404 may also be referred to as firmware. The processor 401 may control the communication apparatus 400 by running the computer program or the software code or the instructions 403 of the processor 401, or by invoking the computer program or the software code or the instructions 404 stored in the memory 402, to implement the following embodiments of this application. The processor 401 may be a central processing unit (central processing unit, CPU), and the memory 402 may be a read-only memory (read-only memory, ROM) or a random access memory (random access memory, RAM).

The processor 401 and the transceiver 405 described in this application may be implemented on an integrated circuit (integrated circuit, IC), an analog IC, a radio frequency integrated circuit (radio frequency integrated circuit, RFIC), a mixed-signal IC, an application-specific integrated circuit (application specific integrated circuit, ASIC), a printed circuit board (printed circuit board, PCB), an electronic device, or the like.

The modules included in the communication apparatus 400 are merely examples for description, and are not limited in this application.

When the communication apparatus 400 is configured to implement the foregoing method embodiment, the processor 401 may implement a function of the processing unit 310, and the transceiver 405 may implement a function of the transceiver unit 320.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, and a compact optical disk read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. The computer program is a set of instructions that indicate each step of an action of an electronic computer or another device having a message processing capability, and is usually written in a program design language and run on a target architecture. When the computer programs or instructions are loaded and executed on a computer, procedures or functions in embodiments of this application are all or partially executed. The computer may be a general-purpose computer, a dedicated computer, a computer network, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a communication device or a module in a communication device, wherein the method comprises:
generating a physical protocol data unit PPDU; and
sending the PPDU, wherein
the communication device operates in a frequency band below 1 GHz, a bandwidth of the PPDU is a first bandwidth, and a difference between a subcarrier spacing in the first bandwidth and 3 kHz is less than or equal to a first threshold.

2. The method according to claim 1, wherein
subcarriers in the first bandwidth comprise subcarriers for wireless power transfer and a direct current subcarrier, and the direct current subcarrier is a null subcarrier or for wireless power transfer.

3. The method according to claim 2, wherein a plan of the subcarriers for wireless power transfer is {(-floor((Nsc-Ndc)/2)-floor(Ndc/2)):(-floor(Ndc/2)-1), (floor(Ndc/2)+1):(floor((Nsc-Ndc)/2)+floor(Ndc/2))}, wherein
Nsc represents a quantity of subcarriers in the first bandwidth, Ndc represents a quantity of direct current subcarriers in the subcarriers in the first bandwidth, and floor represents rounding down.

4. The method according to claim 3, wherein
the first bandwidth is 500 kHz, the subcarrier spacing in the first bandwidth is 3 kHz, a fast Fourier transform FFT size corresponding to the first bandwidth is 256, and Nsc≥159.

5. The method according to claim 4, wherein
Nsc=161, Ndc=1, and the plan of the subcarriers for wireless power transfer is {-80:-1, 1:80}; or
Nsc=163, Ndc=3, and the plan of the subcarriers for wireless power transfer is {-81:-2, 2:81}; or
Nsc=159, Ndc=0, and the plan of the subcarriers for wireless power transfer is {-79:79}.

6. The method according to claim 3, wherein
the bandwidth of the PPDU is 500 kHz, the subcarrier spacing is 312.5 kHz/N, 80≤N≤104, and Nsc≤500*N/312.5.

7. The method according to claim 6, wherein
N=100, Nsc=155, Ndc=1, and the plan of the subcarriers for wireless power transfer is {-77:-1, 1:77}; or
N=100, Nsc=155, Ndc=0, and the plan of the subcarriers for wireless power transfer is {-77:77}.

8. The method according to claim 2, wherein
the first bandwidth is less than or equal to 1 MHz, a clock rate corresponding to the PPDU is 1/N of a clock rate in the VHT/HE/EHT PHY standard, and the subcarrier spacing in the first bandwidth is from 3.0048 kHz to 3.9063 kHz, wherein N is an integer greater than 1.

9. The method according to claim 8, wherein generating the PPDU comprises:
generating the PPDU based on the subcarrier spacing in the first bandwidth and a plan of the subcarriers for wireless power transfer, wherein
the subcarrier spacing in the first bandwidth is determined by performing 1/N clock rate conversion on an 80 MHz PPDU in the VHT PHY standard, the subcarrier spacing is 312.5 kHz/N, and 80≤N≤104; and the plan of the subcarriers for wireless power transfer is M subcarriers in {-122:-2, 2:122}, wherein M≥159; or
the subcarrier spacing in the first bandwidth is determined by performing 1/N clock rate conversion on a 20 MHz PPDU in the HE/EHT PHY standard, the subcarrier spacing is 78.125 kHz/N, and 20≤N≤26; and the plan of the subcarriers for wireless power transfer is M subcarriers in {-122:-2, 2:122}, wherein M≥159.

10. The method according to claim 2, wherein
the first bandwidth is less than or equal to 1 MHz, a clock rate corresponding to the PPDU is 1/N of a clock rate in the VHT/HE/EHT PHY standard, and the subcarrier spacing in the first bandwidth is from 0.2441 kHz to 1.9531 kHz, wherein N is an integer greater than 1.

11. The method according to claim 10, wherein generating the PPDU comprises:
generating the PPDU based on the subcarrier spacing in the first bandwidth, wherein
the subcarrier spacing in the first bandwidth is determined by performing 1/160 clock rate conversion on a 160 MHz PPDU in the VHT PHY standard, and the subcarrier spacing is 312.5 kHz/160; or
the subcarrier spacing in the first bandwidth is determined by performing 1/40 clock rate conversion on a 40 MHz PPDU in the HE/EHT PHY standard, and the subcarrier spacing is 78.125 kHz/40; or
the subcarrier spacing in the first bandwidth is determined by performing 1/80 clock rate conversion on an 80 MHz PPDU in the HE/EHT PHY standard, and the subcarrier spacing is 78.125 kHz/80; or
the subcarrier spacing in the first bandwidth is determined by performing 1/160 clock rate conversion on a 160 MHz PPDU in the HE/EHT PHY standard, and the subcarrier spacing is 78.125 kHz/160; or
the subcarrier spacing in the first bandwidth is determined by performing 1/320 clock rate conversion on a 320 MHz PPDU in the HE/EHT PHY standard, and the subcarrier spacing is 78.125 kHz/320.

12. The method according to claim 2, wherein
the first bandwidth is greater than 1 MHz and less than or equal to 2 MHz, a clock rate corresponding to the PPDU is 1/N of a clock rate in the VHT/HE/EHT PHY standard, and the subcarrier spacing in the first bandwidth is from 6.0096 kHz to 7.8125 kHz, wherein N is an integer greater than 1.

13. The method according to claim 12, wherein generating the PPDU comprises:
generating the PPDU based on the subcarrier spacing in the first bandwidth and a plan of the subcarriers for wireless power transfer, wherein
the subcarrier spacing in the first bandwidth is determined by performing 1/N clock rate conversion on an 80 MHz PPDU in the VHT PHY standard, the subcarrier spacing is 312.5 kHz/N, and 40≤N≤52; and the plan of the subcarriers for wireless power transfer is M subcarriers in {-122:-2, 2:122}, wherein M≥159; or
the subcarrier spacing in the first bandwidth is determined by performing 1/N clock rate conversion on a 20 MHz PPDU in the HE/EHT PHY standard, the subcarrier spacing is 78.125 kHz/N, and 10≤N≤13; and the plan of the subcarriers for wireless power transfer is M subcarriers in {-122:-2, 2:122}, wherein M≥159.

14. The method according to claim 2, wherein
the first bandwidth is greater than 1 MHz and less than or equal to 2 MHz, a clock rate corresponding to the PPDU is 1/N of a clock rate in the VHT/HE/EHT PHY standard, and the subcarrier spacing in the first bandwidth is from 0.4882 kHz to 3.9062 kHz, wherein N is an integer greater than 1.

15. The method according to claim 14, wherein generating the PPDU comprises:
generating the PPDU based on the subcarrier spacing in the first bandwidth, wherein
the subcarrier spacing in the first bandwidth is determined by performing 1/80 clock rate conversion on a 160 MHz PPDU in the VHT PHY standard, and the subcarrier spacing is 312.5 kHz/80; or
the subcarrier spacing in the first bandwidth is determined by performing 1/20 clock rate conversion on a 40 MHz PPDU in the HE/EHT PHY standard, and the subcarrier spacing is 78.125 kHz/20; or
the subcarrier spacing in the first bandwidth is determined by performing 1/40 clock rate conversion on an 80 MHz PPDU in the HE/EHT PHY standard, and the subcarrier spacing is 78.125 kHz/40; or
the subcarrier spacing in the first bandwidth is determined by performing 1/80 clock rate conversion on a 160 MHz PPDU in the HE/EHT PHY standard, and the subcarrier spacing is 78.125 kHz/80; or
the subcarrier spacing in the first bandwidth is determined by performing 1/160 clock rate conversion on a 320 MHz PPDU in the HE/EHT PHY standard, and the subcarrier spacing is 78.125 kHz/160.

16. A communication apparatus, comprising a processor, wherein the processor is configured to communicate with another apparatus through an interface circuit, and perform the method according to any one of claims 1 to 15.

17. A computer program product, wherein the computer program product comprises instructions, and when the instructions are run on a processor, the processor is enabled to perform the method according to any one of claims 1 to 15.

18. A computer-readable storage medium, wherein the storage medium stores a computer program or instructions; and when the computer program or the instructions are executed by a communication apparatus, the method according to any one of claims 1 to 15 is implemented.
